(19) Europäisches Patentamt / European Patent Office / Office européen des brevets

(11) **EP 3 938 331 B1**

(12) **EUROPEAN PATENT SPECIFICATION**

(45) Date of publication and mention of the grant of the patent:
**13.11.2024 Bulletin 2024/46**

(21) Application number: **20774136.4**

(22) Date of filing: **13.03.2020**

(51) International Patent Classification (IPC):
*C03C 17/00* (2006.01)   *B41M 3/14* (2006.01)
*B41M 5/00* (2006.01)   *B41M 7/00* (2006.01)

(52) Cooperative Patent Classification (CPC):
**B41M 5/0047; B41M 7/009; C03C 17/007;**
B41M 3/144; B41M 5/007; C03C 2217/42;
C03C 2218/119

(86) International application number:
**PCT/CN2020/079129**

(87) International publication number:
**WO 2020/187142 (24.09.2020 Gazette 2020/39)**

(54) **GLASS PRODUCT WITH MARKING AND THE PREPARATION PROCESS THEREOF**

GLASPRODUKT MIT MARKIERUNG UND HERSTELLUNGSVERFAHREN DAFÜR

PRODUIT EN VERRE POURVU D'UN MARQUAGE ET PROCÉDÉ DE PRÉPARATION CORRESPONDANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Validation States:
**MA**

(30) Priority: **15.03.2019 CN 201910196456**

(43) Date of publication of application:
**19.01.2022 Bulletin 2022/03**

(73) Proprietor: **Saint-Gobain Glass France**
**92400 Courbevoie (FR)**

(72) Inventors:
• **BRUNET, Marine**
**93303 Aubervilliers (FR)**
• **HEURTEFEU, Bertrand**
**93303 Aubervilliers (FR)**
• **NGHIEM, Bernard**
**Shanghai 200245 (CN)**
• **CHEN, Haifeng**
**Shanghai 200245 (CN)**

(74) Representative: **Saint-Gobain Recherche**
**B.P. 135**
**39, quai Lucien Lefranc**
**93303 Aubervilliers Cedex (FR)**

(56) References cited:
CN-A- 102 939 203   CN-A- 104 507 699
CN-C- 1 058 742   CN-C- 1 305 093
JP-A- H06 155 887   JP-A- H09 143 448
US-A1- 2004 202 795   US-A1- 2008 210 122
US-B2- 8 575 768

## Description

## Technical Field

The present invention relates to the field of the marking for glass product, in particular, to a glass product with marking, and the preparation process thereof.

## Background

As more emphasis is placed on the quality of products, tracing back the information of products, e.g. production process, manufacturers and logistics becomes a trend, in order to facilitate big data analysis. By setting marking on glass products, e.g. two-dimensional code, bar code, the information of each glass product, e.g., production process, manufacturer, logistics and the like, can be tracked by reading marking, in order to facilitate rapid response. At the same time, the marking can also play a role in anti-counterfeiting identification.

In order to ensure the readability, the integrity of the marking should be kept during subsequent processing steps of the glass product and after prolonged use, i.e. the marking need to have a good wear resistance and weathering resistance. In the prior art, although the inkjet printing using mineral ink/enamel-based ink may have a certain degree of heat resistance, it is difficult to keep the integrity of the marking during the cleaning process for the glass. The marking made by laser transfer technology *via* enamel-based ink on the glass could be retained during the glass processing step, e.g. cleaning and heating process, and the integrity of the color of the marking could also be kept. The marking also possesses wear resistance and weathering resistance in some degree. However, unintegrated printheads are more expensive, which reduces their applicability. Inkjet printing using a special high temperature resistant ink (UV-polymerized ink or hot drying ink) enables marking on glass. For example, EP3365398A1 discloses a UV radiation-curable frit-based inkjet ink composition comprising a glass frits component, a chromophore component, a UV curable component, which is used for coating onto a glass, a ceramic or a metal by an inkjet printer. However, the color of markings obtained by using a high temperature resistant ink is generally not desirable, e.g., brown. It is not satisfactory for users who have high requirements for the aesthetics of the glass products.

For glass products, it is tended to use an invisible/quasi-invisible marking for aesthetic reasons. Such marking is often achieved by using an UV type ink. For example, CN103666057A discloses a UV-curable invisible fluorescent ink. However, most of the UV fluorescent molecules are not resistant to high temperatures, and thus making it difficult to withstand the high temperature processing e.g., forming a glass into a desired shape, during glass processing. Moreover, the mineral UV fluorescent component is generally a rare earth element-based doped substance, and its conversion efficiency is not high and it is expensive.

Therefore, in the view of the problems present in the prior art, there is still a need in the art for a marking suitable for glass products. The marking can not only be read for relevant information to achieve tracing for product, but also have wear resistance and weathering resistance. According to actual requirements, the marking is visible or invisible to naked eye. Preferably, the marking is "invisible" or "stealth" to the users, but can be read by a machine, so that the tracing function can be achieved without aesthetically affecting the appearance of the glass.

The document US 2008/210122 A1 describes decorative inks for printing on glass. The document US 8 575 768 B2 describes radiation-curable inks having excellent visibility and scratch resistance. The document JP H09 143448 A describes inks for making marks to the naked eye.

Likewise, it is desirable in the art for a process to obtain a glass product with marking.

## Summary

According to the first aspect of the present invention, provided is a process for preparing a glass product with marking as defined in independent claim 6, wherein, the process comprises 1) coating an ink composition onto a surface of a glass substrate, 2) heating the glass substrate obtained in step 1); wherein, in the obtained glass product with marking, the marking contains particles having a size with a lower limit of 150 nm or more, preferably 200 nm or more; the particles have a size with an upper limit of 600 nm or less, preferably 350 nm or less, more preferably 300 nm or less.

In one embodiment, the particles are crystals.

In another embodiment, the ink composition comprises halogen-containing compound and/or phosphate based compound.

In a preferred embodiment, based on the total weight of the ink composition, the lower limit of the content of the halogen-containing compound is 0.5 wt% or more, preferably 1 wt% or more; the upper limit of the content of the halogen-containing compound is 10 wt% or less, preferably 5 wt% or less; and/or the lower limit of the content of phosphorus element in the phosphate based compound is 0.05 wt% or more, preferably 0.1 wt% or more, more preferably 0.15 wt% or more; the upper limit of the content of phosphorus element in the phosphate based compound is 4 wt% or less, preferably 3 wt% or less, more preferably 2.5 wt% or less.

In one embodiment, a preprocessing step for glass substrate is comprised prior to step 1), wherein the preprocessing step comprises a cleaning step.

In one embodiment, the coating in step 1) is performed with inkjet printing.

In one embodiment, the lower limit of the thickness of the ink composition coated onto the surface of the glass substrate in step 1) is 1 $\mu$m or more; the upper limit of the thickness is 100 $\mu$m or less, preferably 60 $\mu$m or less, more preferably 35 $\mu$m or less.

In one embodiment, the heating in step 2) is conducted at a temperature of from 550 to 750 °C.

According to the second aspect of the present invention, provided is a glass product with marking as defined in independent claim 1, wherein, the marking contains particles having a size with a lower limit of 150 nm or more, preferably 200 nm or more; with an upper limit of 600 nm or less, preferably 350 nm or less, more preferably 300 nm or less.

In one embodiment, the particles are crystals.

At least a portion of the marking is present below a surface of the glass substrate, and extends along the thickness direction of the glass substrate from the surface of the glass substrate to the interior.

In the glass product with marking according to the second aspect of the present invention, the marking is invisible to naked eye in transmission.

In a preferred embodiment, in the glass product with marking according to the second aspect of the present invention, the marking is invisible to naked eye in daylight or natural light in reflection.

In one embodiment, in the glass product with marking according to the second aspect of the present invention, the marking is readable in the following light source: the spectrum peak of the light source locates in blue and/or UV light.

In a preferred embodiment, in the glass product with marking according to the second aspect of the present invention, the marking is readable in Neon light, cold white LED light, blue light, UV light or collimated light in reflection.

In one embodiment, in the glass product with marking according to the second aspect aspect of the present invention, the lower limit of depth of the marking extending along the thickness direction of the glass substrate from the surface of the glass substrate to the interior is 5 nm or more, preferably 10 nm or more; the upper limit of depth is 100 $\mu$m or less, preferably 50 $\mu$m or less, more preferably 10 $\mu$m or less.

In one embodiment, in the glass product with marking according to the second aspect of the present invention, the marking is an identification code, for example, Data matrix code, two-dimensional code, QR code or bar code.

In one embodiment, the glass product with marking according to the second aspect of the present invention is prepared according to the process for preparing the glass product with marking of the first aspect of the present invention.

According to the third aspect of the present invention, provided is use of an ink composition in the process for preparing a glass product with marking according to the first aspect of the present invention or in the preparation of the glass product with marking according to the second aspect of the present invention, wherein, the marking contains particles having a size with a lower limit of 150 nm or more, preferably 200 nm or more; with an upper limit of 600 nm or less, preferably 350 nm or less, more preferably 300 nm or less.

In one embodiment, the particles are crystals.

In another embodiment, the ink composition comprises halogen-containing compound and/or phosphate based compound.

In a preferred embodiment, based on the total weight of the ink composition, the lower limit of the content of halogen-containing compound is 0.5 wt% or more, preferably 1 wt% or more; the upper limit of the content of halogen-containing compound is 10 wt% or less, preferably 5 wt% or less; and/or the lower limit of the content of phosphorus element in the phosphate based compound is 0.05 wt% or more, preferably 0. 1wt% or more, more preferably 0.15 wt% or more; the upper limit of the content of phosphorus element in the phosphate based compound is 4 wt% or less, preferably 3 wt% or less, more preferably 2.5 wt% or less.

## Beneficial Effect

The glass product with marking of the present invention does not have the problem of ink adhesion or enamel adhesion.

In addition, as the marking of the present invention is partially present below the surface of the glass, the marking can withstand the subsequent processing steps of the glass product and keep the integrity, and also keep the integrity after a prolonged use. Therefore, the marking in the glass product of the present invention has a good wear resistance and weathering resistance.

According to actual requirements, the marking of the present can achieve visible or invisible to naked eye.

In a preferred embodiment, the marking of the present invention is invisible to naked eye in transmission, and is also invisible to naked eye in daylight or natural light in reflection. Therefore, the marking of the present invention can achieve the tracing function without aesthetically affecting the appearance of the glass. The glass product with marking according to the invention has improved aesthetics, which can meet the aesthetic requirements for clients in daily life.

Furthermore, the marking of the present invention is still readable in the following light source: the spectrum peak of the light source locates in blue and/or UV light. For example, the marking is readable in for example Neon light, cold white LED light, blue light, UV light or collimated light in reflection. Therefore, the marking of the present invention can be read to obtain information of the glass product, e.g., production process, manufacturer, logistics and the like, thereby enabling the product to be traced to facilitate rapid response.

The process for preparing a glass product with marking has a simple preparation process, low cost and is suitable for industrialized large-scale production.

## Brief Description of the Drawings

Figure 1: schematic diagram of (a) D65 light source, (b) cold white LED light spectrum.

Figure 2: schematic diagram of an embodiment of a process for preparing a glass product with marking.

Figure 3: the image of marking portion of the glass product with marking in Example 1 presented in (a) UV light and dark field, (b) 4000lux collimated light.

Figure 4: SEM image of marking portion of the glass product with marking in Example 2.

Figure 5: microscope image of marking portion of the glass product with marking in dark field in Example 2.

## Detailed Description

The implementation and application of the embodiments are discussed in detail below. It should be understood, however, that the specific embodiments discussed merely illustrate specific ways of implementing and applying the present invention, and do not limit the scope of the present invention.

General definitions and terms

The invention will be further described in detail below, and it is to be understood that the terms are for the purpose of description but not intended to limit the invention.

The technical and scientific terms used herein have the same meaning as commonly understood by one of ordinary skill in the art to which this invention belongs, unless otherwise indicated. In the event of a conflict, the definition provided in this application shall prevail. When a certain amount, concentration or other value or parameter is expressed in the form of a range, a preferred range, or a preferred upper numerical limit, and a preferred lower numerical limit, it is to be understood that any range that combines any one of the upper limit or preferred value of the range with any lower limit or preferred value of the range is specifically recited, regardless of whether the range is specifically disclosed. Ranges of values recited herein are intended to include the endpoints of the range and all integers and fractions (fractions) within the range, unless otherwise stated.

The terms "about" and "approximately" when used in conjunction with a numerical variable, it is generally referred to the values of the variable and all values of the variable within the experimental error (e.g., within a 95% confidence interval of the mean) or within $\pm 10\%$ or broader of the specified value.

The term "optional" or "optionally" as used herein means that the subsequently described event or circumstance may or may not occur. The description includes the occurrence or non-occurrence of the event or circumstance, as well as the arbitrary selection of the subsequently described content.

Unless otherwise indicated, percentages, parts, and the like herein are provided by weight.

The expressions "including", "comprising", "having", "containing" and the like, are meant to be inclusive, and do not exclude unlisted additional elements, steps, or components. The expression "consisting of" excludes any element, step or ingredient that is not specified. The expression "consisting essentially of" means that the scope is limited to the specified elements, steps or components, together with elements, steps or components that are optionally present and do not substantially affect the basic and novel characteristics of the claimed subject matter. It should be understood that the expression "comprising" encompasses the expression "consisting essentially of" and "consisting of."

The term "one or more" or "at least one", as used herein, means one, two, three, four, five, six, seven, eight or more.

In this context, "Outer" and "inner" are directions with respect to the vehicle body, "outer" refers to a direction away from the vehicle body, and "inner" refers to a direction facing the vehicle body.

In this context, the term "not resistant to high temperature" for the ink composition refers to that, an ink composition generally understood in the art could not withstand temperatures from 500 °C to 800 °C, from 550 °C to 750 °C and above. Ink composition could not keep its original shape, color or other physical properties at such temperatures, and it would decompose, carbonize or burn to ashes.

In this context, the term "marking" can be a symbol, a figure, an identification code or any pattern, for example it may be an identification code. Identification code include, but not limited to, bar code, two-dimensional code, Data matrix code, QR code or those mentioned in CN106061746A, for example 3-DI code, Aztex Code, Codablock, Code 1, Code 16K, Dot Code, ezCode, BeeTagg Big, BeeTagg Landscape, Maxicode, Snpwflake, Verocode, BeeTagg Hexagon, BeeTagg None, ShotCode, MiniCode, Code 49, Datastrip Code, CP Code, ISS SuperCode.

In this context, the term "ink" may also be called as writing ink.

In this context, the term "collimated light" may also be called as parallel light.

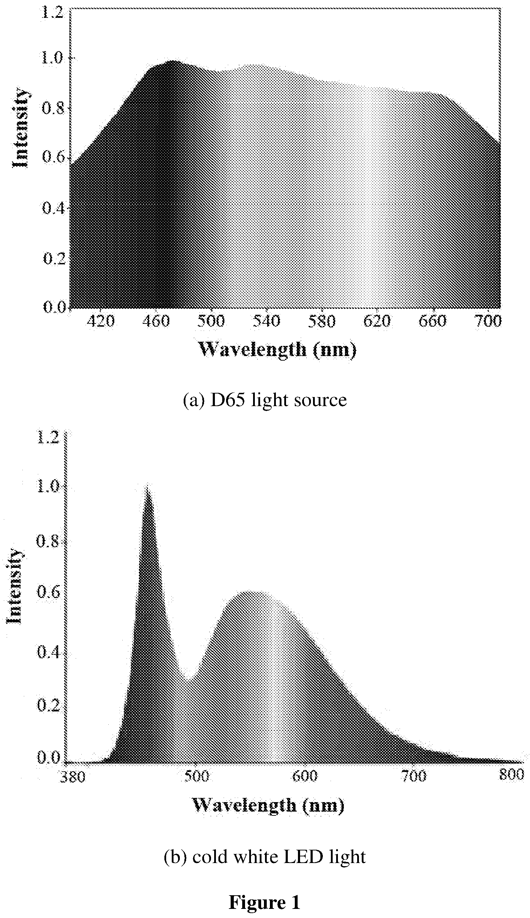

In this context, the term "cold white LED light" has the characteristics of a cold white LED commonly used in the art. Specifically, its spectrum characteristic is high in blue portion and low in green portion, and the highest peak among the spectrum is the blue light portion, e.g., the intensity of the blue light is about 3.33 times that of the green light, and the energy of the blue light is about 4.5 times that of the green light. The intensity of the cold white LED light in blue light portion is higher than D65 light source. In natural light or daylight, the intensity of the blue light is lower than that of the green light, e.g., for about 0.68 times, and the energy of the blue light is lower than that of the green light, e.g., for about 0.9 times. Figure 1 is a schematic diagram of the spectra of a D65 light source (the most commonly used artificial daylight in standard light sources, with color temperature of 6500K) and cold white LED light. It can be clearly observed that the cold white LED light has a relatively higher intensity in the wavelength range of from 400 to 480 nm. The spectrum peak of the cold white LED light lies between 400 and 480 nm.

The color difference value used herein, i.e. ΔE(Delta-E), refers to the test unit for the difference in color perceived by human eye in a uniform color perception space. ΔE can be calculated based on the following formula:

$$\Delta E = \sqrt{(L^* - L^*_{ref})^2 + (a^* - a^*_{ref})^2 + (b^* - b^*_{ref})^2}$$

wherein, L* refers to the brightness of the glass with marking portion;
a* refers to the red green color of the glass with marking portion;
b* refers to the blue yellow color of the glass with marking portion;
$L^*_{ref}$, $a^*_{ref}$, $b^*_{ref}$ refer to the corresponding values of the glass without marking portion (control glass).

ΔE is measured by a color-difference meter, e.g., Minolta color-difference meter. The testing light source is, for example, a visible light source, e.g., D65 light source. The color difference between the portion with marking and the portion without marking herein can be characterized by ΔE.

In this context, "the spectrum peak of the light source locates in blue and/or UV light" generally refers to a light source with a spectrum peak located in the range of from 100 to 480 nm, preferably Neon light, cold white LED light, blue light, UV light, collimated light or the combination thereof, more preferably blue light and/or UV light.

In this context, the ultraviolet light is also called UV light, with wavelength range of usually about 400 nm or less, e.g., about from 100 to 400 nm.

In this context, the blue light has a wavelength of about from 400 to 480 nm.

In this context, the wavelength of visible light is generally about from 380 to 780 nm, preferably from 400 to 780 nm.

In this context, the term "visible to naked eye" used has a meaning commonly understood in the art. Specifically, the portion with marking is different from the portion without marking in naked-eye observation. Therefore, the marking can be observed by naked eye.

In this context, the term "invisible to naked eye" is also called "stealth", which has a meaning commonly understood in the art. Specifically, there is no significant difference in naked-eye observation between the portion with marking and the portion without marking in transmission, i.e. the marking cannot be observed by naked eye. The light source for irradiation may be, e.g. visible light, daylight, natural light, ambient light, LED light, blue light and the like. In one embodiment, there is almost no difference in transmissivity between the portion with marking and the portion without marking. In another embodiment, when a glass product with marking is tested using a D65 light source, the color difference value $\Delta E_T$ of the portion with marking compared with the portion without marking in transmission is about 0.5 or less, for example about 0.4, 0.2 or close to 0. In a further embodiment, the marking is also invisible to naked eye in daylight, natural light, visible light or ambient light in reflection. In yet another embodiemt, when a glass product with marking is tested using a D65 light source, the color difference value $\Delta E_R$ of the portion with marking compared with the portion without marking in reflection is about 3 or less, for example about from 0.85 to 2, e.g., 0.9, 1.5.

In this context, the term "readable" can also be called "identifiable", which has a meaning commonly understood in the art. "Readable" or "identifiable" refers to that a marking can be captured into a clear image through a reading apparatus, and be read to convert it into information corresponding to the marking.

In this context, the term "reading apparatus" can also be called "identification scanner", which is a reading apparatus commonly understood in the art. A reading apparatus generally contains a light source, a lens, a light-sensitive element and a decoding element that can convert light signals into electrical signals, and the like. In one embodiment, the light source of a reading apparatus is generally a light source whose spectrum peak locates in blue and/or UV light portion, i.e. a light source whose spectrum peak locates from 100 to 480 nm. In a preferred embodiment, the light source is Neon light, cold white LED light, blue light, UV light, collimated light or the combination thereof. The reading apparatus may be, for example, an identification scanning apparatus from Cognex or Keyence.

In this context, the term "halogen" refers to fluorine, chlorine, bromine, iodine.

In this context, the term "surface roughness " has a meaning commonly understood in the art, which refers to the processing surface having small pitch and tiny unevenness for peak and valley. Characterization can be performed using a comparison method, contact stylus method, light-sectioning method, interference method or the like. For example, the measurement could be conducted by a surface roughness-measuring instrument, a profilometer or a surface profilometer, e.g., Profilometer Dektak from Bruker.

Preparation process

Provided is a process for preparing a glass product with marking as defined in independent claim 1, wherein the process comprises:

1) coating an ink composition onto a surface of a glass substrate,
2) heating the glass substrate obtained in step 1).

The obtained glass product with marking, the marking contains particles having a size with a lower limit of 150 nm or more, preferably 200 nm or more; and the particles have a size with an upper limit of 600 nm or less, preferably 350 nm or less, more preferably 300 nm or less. The particles may exist in one or more of the following locations: partially being intercalated into the glass substrate where the marking locates, or being embedded inside the glass substrate where the marking locates. In preferred embodiments, the particles are crystals.

In one embodiment, a preprocessing step for glass substrate is comprised prior to step 1), wherein the preprocessing step comprises a cleaning step. Cleaning could keep the surface of the glass substrate clean to remove the organic or inorganic contaminants that may exist on the surface of the glass substrate, e.g., those remained during the preparation process of the glass substrate. In one embodiment, cleaning is performed by brushing to remove contaminants on the surface of the glass substrate. In another embodiment, cleaning is performed by polishing or grinding to remove contaminants on the surface of the glass substrate.

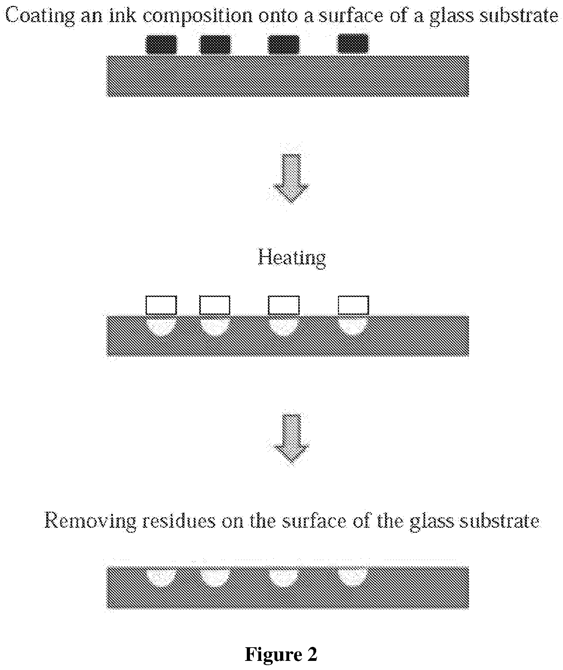

In step 1), an ink composition is coated onto the surface of the glass substrate, as shown in Figure 2. The method of coating an ink onto the surface of the glass substrate should make the ink uniformly set on a predetermined position of the surface of the glass substrate. Coating can be performed by printing, which includes, but not limited to, screen printing or inkjet printing. Preferably inkjet printing. Inkjet printing uses a method commonly used in the art, for example, an inkjet printer, such as a 9450 inkjet printer from Markem-Imaje. The settings of printer are conventional in the art.

In one embodiment, the amount of the ink composition coated onto the surface of the glass substrate should be appropriate so that a readable effect of "invisible marking" can be achieved. In one embodiment, the amount of ink composition coated onto the surface of the glass substrate is expressed by thickness of the ink composition. The lower limit of the thickness of the ink composition is 1 $\mu$m or more; the upper limit of the thickness is 100 $\mu$m or less, preferably 60 $\mu$m or less, more preferably 35 $\mu$m or less, e.g., about 1, 7, 20, 35, 60 $\mu$m. The thickness can be measured using test methods commonly used in the art. In another embodiment, the unit area content of the ink composition coated onto the surface of the glass substrate is from $1.0\times10^{-5}$ to $3\times10^{-2}$ g/cm$^2$, preferably from $2.0\times10^{-5}$ to $2.5\times10^{-2}$ g/cm$^2$, for example, from $2.0\times10^{-5}$ to $1\times10^{-4}$ g/cm$^2$, from $7.5\times10^{-3}$ to $2.5\times10^{-2}$ g/cm$^2$, from $4.0\times10^{-3}$ to $1.5\times10^{-2}$ g/cm$^2$, from $2.0\times10^{-3}$ to $9\times10^{-3}$ g/cm$^2$, e.g., $1.5\times10^{-5}$ g/cm$^2$, $2.5\times10^{-2}$ g/cm$^2$, $1.5\times10^{-2}$ g/cm$^2$, $9\times10^{-3}$ g/cm$^2$, $2.0\times10^{-5}$ g/cm$^2$, $7.9\times10^{-3}$ g/cm$^2$, $4.8\times10^{-5}$ g/cm$^2$, $9.6\times10^{-5}$ g/cm$^2$, $9.5\times10^{-3}$ g/cm$^2$, $2.4\times10^{-2}$ g/cm$^2$, $1.4\times10^{-2}$ g/cm$^2$, $5.7\times10^{-3}$ g/cm$^2$, $4.8\times10^{-3}$ g/cm$^2$, $2.8\times10^{-3}$ g/cm$^2$, $3.3\times10^{-3}$ g/cm$^2$, $8.4\times10^{-3}$ g/cm$^2$.

In step 2), the temperature of heating should render that the ink composition coated onto the surface of the glass substrate could modify the glass substrate to which it is in contact. In one embodiment, the heating may be conducted at a temperature of about from 550 to 750 °C, preferably about from 600 to 710 °C, e.g., about 600, 640, 650 °C. In another embodiment, the heating may be conducted for about from 1 to 30 min, preferably about from 3 to 15 min, e.g., about 3, 10, from 5 to 10 min.

In one embodiment, the heating described in step 2) is a conventional heating process for the automobile glass manufacture, for example, after marking being printed, the glass is sent to a hot bending furnace to form a required bending radian for a glass.

After heating, as shown in Figure 2, the surface and/or a certain depth of the glass substrate is modified. The lower limit of the modification depth is 5 nm or more, preferably 10 nm or more; the upper limit of the depth is 100 $\mu$m or less, preferably 50 $\mu$m or less, more preferably 10 $\mu$m or less, e.g., about 10 nm, 100 nm, 1 $\mu$m, 10 $\mu$m, 15 $\mu$m. The modification depth can be measured using methods conventional in the art, e.g., SEM. In one embodiment, the modified glass substrate has a slightly higher reflectivity than the unmodified portion, i.e. the portion without coating an ink composition. However, the transmissivity of the modified portion in the glass substrate is close to that of the portion without coating an ink composition, i.e. the unmodified portion. In one embodiment, the modified portion of the glass substrate is substantially transparent in naked eye observation, i.e. the marking is invisible to naked eye observation particularly in transmission. The portion of the glass substrate modified by an ink composition has a clear boundary, and can be clearly distinguished from the unmodified portion, so that it can be easily read by a reading apparatus.

In one embodiment, as shown in Figure 2, after heating in step 2), there is a residue of the burned ink composition, e.g., a gray ink residue, on the surface of the glass substrate. Therefore, after step 2), a step 3), i.e. removing the residue generated by heating the surface of the glass substrate in step 2), is optionally included. The removal of the residue may be performed using a method conventional in the art, e.g., wiping, water jet, brushing. The glass substrate may optionally be dried after the residue being removed to get rid of moisture or solvent introduced on the surface of the glass substrate in the step of removing the residue. Drying can be performed using a conventional method in the art, and conducted at a conventional drying temperature. Drying can be performed at a temperature of about 60 °C or less, about 50 °C or less, about 45 °C or less, about 40 °C or less, about 35 °C or less, about 20 °C or less or at any other suitable temperature. Drying can be performed for, e.g., about 1 min, 1h, 2h, 4h, 8h, 12h, 24h or any other suitable time.

Ink composition

In the process for preparing a glass product with marking according to the present invention, the specific ink type used or its combination with the preparation process of the present invention is helpful to achieve the glass product with marking of the present invention.

The ink composition of the present invention can change the composition of the glass substrate and/or increase the surface roughness of the glass substrate through ion exchange, doping, etching, penetration or precipitation. For example, ion exchange may be performed for the components in the ink composition with the components in glass substrate. The components in the ink composition can enter into the glass substrate through doping, etching or penetration. The ink composition can interact with the glass substrate physically or chemically such that it can be precipitated on the glass substrate.

In one embodiment, according to the common understanding in the art, the ink composition of the present invention is not resistant to high temperature. "High temperature" herein refers to the temperature commonly used in glass processing such as bending, e.g., about from 500 to 800 °C, from 550 to 750 °C. Not resistant to high temperature refers to that the ink composition, under such temperature, could not keep its substantially original color being coated, or it may form into ashes.

The ink composition of the present invention should be selected such that the marking can be dried quickly, and thus the clarity and integrity of the marking could be kept during subsequent processing, e.g., cutting and grinding, of the glass substrate.

The ink composition of the present invention should also be selected such that the clarity and integrity of the marking could be kept during subsequent processing, e.g., cleaning process, of the glass substrate.

The ink composition of the present invention should be selected such that the ink composition could be used to modify the surface of the glass substrate under heating conditions. In one embodiment, an ink composition of the present invention is selected such that the surface of the glass substrate could be modified to obtain an "invisible marking". In another embodiment, a colorant component could also be added to the ink composition such that the surface of the glass substrate could be modified during heating process to obtain a visible marking.

In one embodiment, the ink composition comprises halogen-containing compound and/or phosphate based compound. Surprisingly, the addition of halogen-containing compound and/or phosphate based compound is helpful for achieving the modification of the glass components *via* the ink composition.

Specifically, the halogen-containing compound is helpful for the extraction of alkali ions, e.g., sodium ions and potassium ions, in glass substrate, for example, recombining the densified components of the glass substrate, thereby changing the optical index of the glass substrate, or for example, rendering the reflectivity of the modified portion in the glass substrate slightly higher than that of the unmodified portion. Since the depth of the modified potion of the glass substrate is only about from 5 nm to 100 $\mu$m, there is no significant effect on the transmission. The extraction of alkali ions can also densify glass substrate, thereby improving the corrosion resistance of the glass substrate with marking portion, and enhancing the weathering resistance of the marking. Halogen-based compounds may be halogen functional group-containing organics, e.g., chlorine-containing compounds, such as bisphenol A-epichlorohydrin copolymers, those with CAS number of 25068-38-6. In one embodiment, the ink composition is Markem-Imaje 5144M, which contains bisphenol A-epichlorohydrin polymer (CAS number 25068-38-6). Wherein the weight-average molecular weight of bisphenol A-epichlorohydrin polymer is about 40000.

In one embodiment, based on the total weight of the ink composition, the lower limit of the content of halogen-containing compound is 0.5 wt% or more, preferably 1 wt% or more; the upper limit of the content of halogen-containing compound is 10 wt% or less, preferably 5 wt% or less; and/or the lower limit of the content of phosphorus element in the phosphate based compound is 0.05 wt% or more, preferably 0.1 wt% or more, more preferably 0.15 wt% or more; the upper limit of the content of phosphorus element in the phosphate based compound is 4 wt% or less, preferably 3 wt% or less, more preferably 2.5 wt% or less.

When phosphorus-containing glass is used as glass substrate, an ink containing a phosphate based compound could be more easily diffused into the glass substrate, and thus modifying the glass substrate. The phosphate based compound herein includes inorganic phosphate-based compound and organic phosphonate-based compound. The phosphate-based compound may be, for example, a phosphorus (phosphine)-containing initiator such as phenyl bis(2,4,6-trimethylbenzoyl) phosphine oxide, a compound having a CAS number of 1187441-10-6, or the combination thereof. In one embodiment, the ink composition is Tiger TIGITAL® Series 140/1, which contains phenyl bis(2,4,6-trimethylbenzoyl) phosphine oxide and a compound having a CAS number of 1187441-10-6.

In one embodiment, based on the total weight of the ink composition, the content of phosphate is about from 2.5 to 11 wt%, preferably about from 2.5 to 10 wt%. In another embodiment, based on the total weight of the ink composition, the content of phosphorus element in the phosphate based compound is about from 0.05 to 4 wt%, preferably about from 0.1 to 3 wt%, more preferably from 0.15 to 2.5 wt%, for example from 0.19 to 0.74 wt%, from 0.44 to 0.89 wt%, from 0.89 to 2.22 wt%.

In one embodiment, the ink composition of the present invention may optionally further include one or more selected from the following: acrylic acid/acrylate based compound/polymer, photoinitiator, amine-modified monomer/oligomer, thiol-modified compound/monomer and organic pigment. The acrylic acid/acrylate compound/polymer is a compound having an acrylic acid/acrylate group and a polymer having an acrylic acid/acrylate group. Wherein, the acrylic acid/acrylate includes, but not limited to, monoacrylic acid/acrylate monomer, difunctional acrylic acid/acrylate monomer, trifunctional acrylic acid/acrylate monomer, tetrafunctional or higher functional acrylic acid/acrylate monomer and the polymer thereof, e.g., (methyl) methacrylate, ethyl (methyl) acrylate, n-butyl (methyl) acrylate, isobutyl (methyl) acrylate, isooctyl acrylate, (methyl) acrylic acid, glycidyl(methyl) acrylate, hydroxyethyl (methyl) acrylate, cycloaliphatic acrylate monomer, tetrahydrofurfuryl acrylate, lauryl acrylate, 2-phenoxyethyl acrylate, hydroxypropyl (methyl) acrylate, isobornyl acrylate, Tri(propylene glycol) diacrylate, trimethylolpropane triacrylate, and those having CAS numbers of 86273-46-3, 63225-53-6, 13048-33-4, 66492-51-1, 111497-86-0, 94624-09-6, 84170-74-1, 1187441-10-6, 28961-43-5 or the combination thereof. The polymer comprising an acrylic acid/acrylate group includes, but not limited to, polystyrene-acrylate, polystyrene-acrylic acid.

The ink composition can be selected, for example, as hot curing type or photo-curing type. When a photo-curing type ink is used, a photoinitiator is usually incorporated. The photoinitiator is a commonly used photoinitiator in a UV curing type ink composition, which includes, but not limited to, benzoin ethers, azos, alkyl phenones, acyl phosphorus oxides, thioxanthrones, iodonium salts, cumene hexafluorophosphate ferrocene or the combination thereof, for example, phenyl bis(2,4,6-trimethylbenzoyl) phosphine oxide, a compound having a CAS number of 1187441-10-6 or the combination thereof. The amine-modified monomer/oligomer includes, but not limited to, N-vinylcaprolactam, a compound having a CAS number of 111497-86-0, ethoxylated cocoamine or the combination thereof. The thiol-modified compound/monomer may be, for example, a thiol-modified compound having oxidation-resistance or inhibiting a crosslinking reaction under UV irradiation.

In one embodiment, the ink composition does not comprise pigment, particularly organic pigment. The pigment includes, but not limited to, azo pigment, phthalocyanine pigment, quinacridone pigment, arylmethane pigment and the like, which gives the ink different colors. For example, the organic pigments exhibit blue, yellow, magenta and cyan.

The ink composition may further optionally comprise a solvent. The solvent includes, but not limited to, water, ketones, and alcohols, e.g., methyl ethyl ketone, isopropyl alcohol, ethanol, and the like.

The ink composition may further optionally comprise one or more other additives, which include, but not limited to, surfactant, wetting agent, diluent, defoamer, adhesive promoter, rheology modifier, leveling additive, stabilizer, dispersant, inhibitor and the like, e.g., ethoxylated cocoamine, glycidyl 12-14 alkyl ether.

In one embodiment, the ink composition comprises a halogen-containing compound, an amine-modified monomer/oligomer, a solvent and a diluent.

In another embodiment, the ink composition comprises an acrylic acid/acrylate based compound/polymer, a phosphine-containing initiator, amine-modified monomer/oligomer.

In one embodiment, the content of the organic components in the ink composition of the present invention is about 70% or more, preferably about 80% or more, and more preferably about 90% or more.

For the preparation of the glass products with "invisible marking" or "marking invisible to naked eye", it is preferable to avoid the use of inorganic compounds, and thus the (organic) residue of the ink composition located on the surface of the glass substrate could be completely cleared after heating process.

In a preferred embodiment, the ink composition comprises only a small amount of inorganic components. In one embodiment, the ink composition does not comprise silicon dioxide. In another embodiment, the ink composition does not comprise glass frit. In yet another embodiment, the ink composition does not comprise inorganic pigment.

Exemplary ink composition is, for example, Markem-Imaje 5144M, Tiger TIGITAL, e.g., TIGITAL®Series 140/1 (blue, yellow or magenta)(wherein the lower limit of the content of phosphorus element is 0.19 wt% or more, the upper limit is 0.74 wt% or less), Marabu Ultra Jet DLE-A cyan 459, yellow 428 or magenta 438 (wherein the lower limit of the content of phosphorus element is 0.89 wt% or more, the upper limit is 2.22 wt% or less), Nazdarv 710 Series UV/LED inkjet ink (yellow and cyan) (wherein the lower limit of the content of phosphorus element is 0.44 wt% or more, the upper limit is 0.89 wt% or less). The above-mentioned color of the ink, e.g., blue, yellow and the like, is the ink color of ink composition prior to high temperature treatment.

For the preparation of the glass products with visible markings, colorants are additionally added into the ink composition appropriately. The colorants include, but not limited to, cobalt ion-containing compounds, gold-containing nanoparticles, such as the colorants that give the ink composition gray, yellow or red, and thus the obtained markings are visible.

Provided is also use of an ink composition in the process for preparing a glass product with marking of the present invention or for preparing a glass product with marking of the present invention.

In the present invention, the combination of a specific ink composition with preparation process is beneficial to obtain a glass product with marking having the desired beneficial effects of the present invention.

Glass product with marking

Provided is a glass product with marking comprising a glass substrate.

The "glass" of the present invention is not particular limited with regard to the application field, for example, it may be an architectural glass, a vehicle glass and the like. For vehicle glass, it may be a front/rear windshield glass, a door glass or a skylight. The glass of the present invention is not particular limited for the preparation process, for example, it may be a float glass, a flat glass, a tempered glass, a laminated glass and the like. The composition of the glass of the present invention is also not particularly limited, for example, it may be a silicate glass, a color glass, a boron-phosphorosilicate glass and the like.

In this context, the "glass substrate" has two opposite surfaces, an ink composition can be coated onto any one surface of the glass substrate according to actual requirements. In the embodiment of the laminated glass, the glass product usually contains more than two glass substrates, an ink composition can be coated onto any one of the surface according to actual requirements.

The size of the marking in glass product of the present invention is not particularly limited, for example, it may have a general size and resolution that the marking could usually have. For example, it has a size and resolution usually for an identification code, and thus it can be identified by a reading apparatus. Any marking size can be set according to actual requirements.

In one embodiment, at least a portion of the marking is arranged below the surface of the glass substrate, and extends along the thickness direction of the glass substrate from the surface of the glass substrate to the interior. Depending on the location for the ink composition coated onto the surface of the glass substrate, at least a portion of the surface of the glass substrate would be coated with the ink composition.

In one embodiment, the lower limit of depth of the marking extending along the surface of the glass substrate to the interior is 5 nm or more, preferably 10 nm or more; the upper limit of depth is 100 $\mu$m or less, preferably 50 $\mu$m or less, more preferably 10 $\mu$m or less. Therefore, on the surface of the obtained glass product with marking, there is no deposition of ink composition, and thus there is substantially no adhesion or scratches to the marking caused by the presence of the ink composition on the surface of the glass substrate.

The marking contains particles. The lower limit of the size of the particles is 150 nm or more, preferably 200 nm or more; the upper limit of the size of particles is 600 nm or less, preferably 350 nm or less, more preferably 300 nm or less. When the particles are spherical, the size can refer to the diameter of the particles. In one embodiment, the particles have an irregular shape. The size could be understood as the equivalent spherical diameter of the particles, i.e. the diameter of a ball having the same volume as the particle. The particle size makes it more sensitive to light sources with shorter wavelengths, e.g., UV light/blue light. In UV light/blue light, the particles have a certain degree of scattering ability, and thus the marking is readable in reflection. The blue light or UV light scattered by the marking would be absorbed by the glass it passes through under transmission and difficult to penetrate the glass.

In one embodiment, the particles are crystals.

In one embodiment, crystal density is about from 60 to 100 per 10 $\mu$m$^2$, preferably about from 70 to 90 per 10 $\mu$m$^2$. The crystal density is obtained, for example, by microscope observation, such as using an optical microscope or an electron microscope, e.g., scanning electron microscope.

In another embodiment, the surface roughness of the glass substrate at the location with marking is higher than that without marking.

The optical properties of the portion with marking of the glass product according to the present invention can be characterized using the following method.

In the glass product with marking of the present invention, the marking is an invisible marking. The marking is invisible to naked eye in transmission. Preferably, the marking is invisible to naked eye in daylight, natural light, visible light, ambient light, cold white LED light or blue light, etc. in transmission. Furthermore, the marking is not identifiable in UV light in transmission. In yet another embodiment, the marking is invisible to naked eye under indoors and outdoors ambient light source. For example, when the glass product is a vehicle glass, passengers could not see the marking while sitting in the car or standing outside the car in daily life.

In one embodiment, the marking of the glass product in the present invention is invisible to naked eye in daylight, natural light, visible light or ambient light in reflection. In another embodiment, the marking is invisible to naked eye in indoors and outdoors ambient light source in reflection.

In yet another embodiment, when a glass product with marking is tested using a D65 light source, the color difference value $\Delta E_T$ of the portion with marking compared with the portion without marking (control glass) in transmission is about 0.5 or less, e.g., about 0.4, 0.2 or close to 0.

In one embodiment, when a glass product with marking is tested using a D65 light source, the color difference value $\Delta E_R$ of the portion with marking compared with the portion without marking (control glass) in reflection is about 3 or less, for example about from 0.85 to 2, e.g., 0.9, 1.5.

In another embodiment, the color difference value $\Delta E_T$ of the glass product with marking in transmission is smaller than the color difference value $\Delta E_R$ in reflection.

In one embodiment, the marking in the glass product of the present invention is readable. In another embodiment, the marking is readable in the light source whose spectrum peak locates in blue and/or UV light. In yet another embodiment, the marking is readable preferably under the light source whose spectrum peak locates between 100 and 480 nm in reflection, e.g., Neon light, cold white LED light, blue light, UV light or collimated light. In another embodiment, in a marking image captured by an imaging device, e.g., a camera or a microscope, under the light source whose spectrum peak locates between 100 and 480 nm, preferably in blue and/or UV light portion, e.g., Neon light, cold white LED light, blue light, UV light or collimated light, the marking is clear and integral, and the edge of the marking is clear, which is significantly different from the portion without marking. In one embodiment, the illuminance of light source is 2000lux or more, preferably 3000lux or more, and more preferably 4000lux or more, preferably, the light source is a collimated light. In a preferred embodiment, the marking could be read in dark field or dark field conditions. Reading in dark field or dark field conditions could improve the contrast of the marking, and increase the color difference between the portion with marking and the portion without marking, such that the marking could be easily read by a reading apparatus. In one embodiment, the marking may also be arranged above the surface of the glass substrate.

In one embodiment, in the glass product with marking according to the present invention, the marking is an identification code, for example those mentioned herein, e.g., Data matrix code, bar code, two-dimensional code, and QR code.

## Examples

The following example describes the glass product with marking of the present invention and the preparation process thereof in detail with reference to the drawings and specific embodiments, but does not constitute a limitation thereto.

### Test methods

$\triangle E_T$, $\triangle E_R$ were measured using a Minolta color difference meter, wherein the light source was D65.

The surface roughness of the glass substrate was measured by a Profilometer Dektak from Bruker.

### Example 1

### Materials

Ink composition: Markem-Imaje (Markem) 5144M (non-high temperature resistant ink; wherein bisphenol A-epichlorohydrin polymer (CAS number of 25068-38-6) was contained in the ink composition with the content of about 2 wt% of the total weight of ink composition).

Preparation process

With reference to Figure 2, the preparation process included the following steps

1) cleaning the glass substrate to be treated,
2) using the ink of Example 1 to inkjet-print a two-dimensional code pattern on the surface of the glass substrate through a Markem-Imaje 9450 inkjet printer, and the thickness of the ink on the surface of the glass substrate was 7 $\mu$m,
3) heating the glass substrate of step 2), with the heating temperature of 650 °C, and the heating time of from 5 to 10 min,
4) using a wet cloth to clear the ashes of the ink composition existed on the surface of the glass substrate after heating.

Result

The glass substrate obtained in step 2) was wiped with a wet cloth and a dry tissue. The ink marking remains clear and integral after wiping. The glass substrate obtained in step 2) was cleaned with a glass washing machine that is commonly used for cleaning glass. The marking can also keep clear and integral after cleaning.

The marking in the obtained glass product with marking was further observed and tested, and the characteristics are listed as follows:

the marking contains particles, and the particle size is from 200 to 300 nm. Furthermore, the particles are crystals.

In addition, at least a portion of the marking is located below the surface of the glass substrate, and the depth of the marking extending along the thickness direction of the glass substrate from the surface of the glass substrate to the interior is from 100 nm to 10 $\mu$m. In the glass product with marking, the surface roughness of the position that is coated with an ink composition in the glass substrate is increased compared with that prior to coating.

Furthermore, the marking is invisible to naked eye in transmission in light sources such as daylight, natural light, ambient light where the vehicle glass and architectural glass are usually located, and it is also invisible to naked eye in reflection in such light sources.

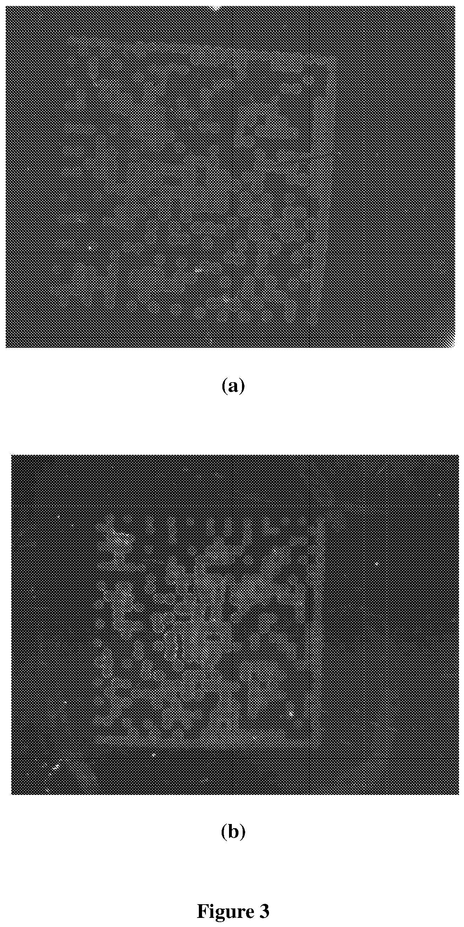

However, in UV light dark field and 4000lux collimated light, the marking can be read by a reading apparatus. The images of the glass products at the marking positions are shown in Figures 3 (a) and (b) respectively. It can be observed from the figures that the edge of markings is clear and integral, which can be well distinguished from the glass portion without coating an ink composition. Therefore, in a UV light dark field or a 4000lux collimated light, an industrial scanner (for example Cognex identification scanning apparatus) can be used to read the marking in the glass product of the present invention, and thus the related information in the two-dimensional code marking could be read.

In addition, the marking in the glass product with marking obtained using the ink composition of Example 1 can withstand a washing machine, and thus has a good wear resistance.

Examples 2-3

Materials

Ink composition: Tiger TIGITAL® Series 140/1,
wherein phenyl bis(2,4,6-trimethylbenzoyl) phosphine oxide and the compound with a CAS number of 1187441-10-6 were contained, with the contents of from 2.5 to 10 wt% and from 0.1 to 1 wt%, respectively, wherein the content of phosphorus element is from 0.19 to 0.74 wt%.

Preparation process

1) cleaning the glass substrate to be treated by a glass washing machine,
2) using an ink composition for single pass printing through a piezoelectric drop-on-demand inkjet print head. The printing temperature was 40 °C. The thickness of the ink composition coated on the glass surface was 7 $\mu$m (Example 2) and 35 $\mu$m (Example 3, correspondingly the maximum amount of the ink composition coated onto the surface of the glass substrate being $2.8 \times 10^{-3}$ g/cm$^2$). The printed pattern was a two-dimensional code,
3) heating the glass substrate of step 2), with the heating temperature of 640 °C, and the heating time of 3 min.

Result

The marking in the obtained glass product with marking was observed and tested, and the characteristics are listed as follows:

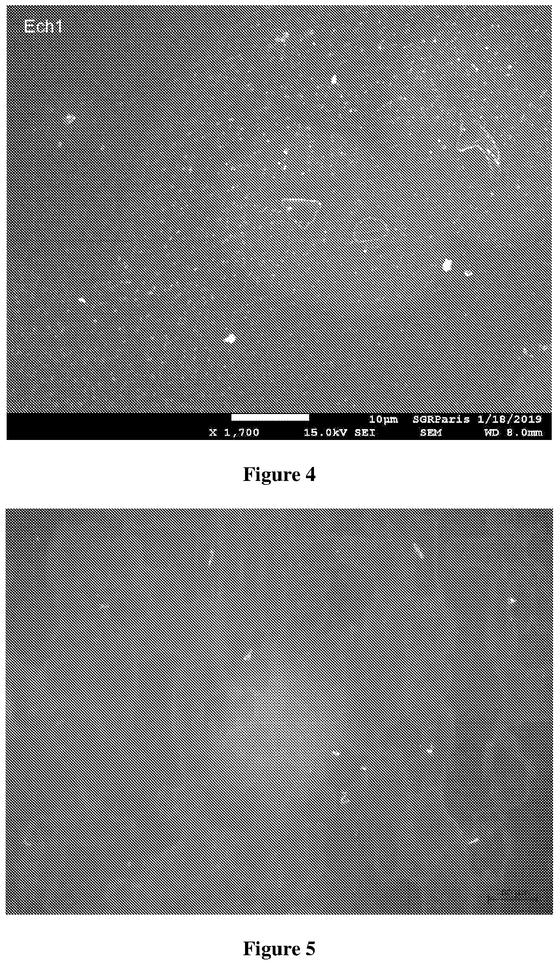

As is shown in Figure 4, the marking contains particles, and the particles are those fine white spots in large amount presented in this figure with the particle size of from 200 to 300 nm and the particle density of from 70 to 90 per 10 $\mu m^2$.

In addition, at least a portion of the marking is present below the surface of the glass substrate, and depth of the marking extending along the thickness direction of the glass substrate from the surface of the glass substrate to the interior is from 10 nm to 15 $\mu m$.

In addition, in the glass product with marking, the surface roughness of the position that is coated with an ink composition is increased compared with that prior to coating.

The same as Example 1, in the glass product with marking obtained according to Example 2, the marking is invisible to naked eye in transmission in light sources such as daylight, natural light, ambient light where the vehicle glass and architectural glass are usually located, and the marking is also invisible to naked eye in reflection in such light sources.

Specifically, in the glass product of Example 2, the color difference value in transmission ($\triangle E_T$) of the glass substrate in the portion with marking compared with the position without marking is 0.4.

In the glass product of Example 2, the color difference value in reflection ($\triangle E_R$) of the glass substrate in the portion with marking compared with the position without marking is 0.9.

In the glass product of Example 3, the color difference value in transmission ($\triangle E_T$) of the glass substrate in the portion with marking compared with the position without marking is 0.2.

In the glass product of Example 3, the color difference value in reflection ($\triangle E_R$) of the glass substrate in the portion with marking compared with the position without marking is 1.5.

Figure 5 shows an optical microscope image of the glass product of Example 2 in a 4000 lux collimated light dark field. It can be clearly seen from the image that the edge of marking is clear, and the position where the ink composition is coated (i.e. the marking portion) can be clearly distinguished from the position without coating an ink composition, and thus the marking image could be easily obtained by a reading apparatus and then the information in the marking could be read.

In addition, the marking in the glass product with marking obtained using the ink composition of Examples 2 and 3 can withstand a washing machine, and thus has a good wear resistance.

Although specific embodiments of the invention have been described above, it is understood that they are for purposes of example only, and the scope of the invention is defined by the appended claims. Those skilled in the art can make various changes or modifications to the embodiments without departing from the spirit and scope of the invention, and such changes and modifications fall within the scope of the invention.

**Claims**

1. A glass product with marking, comprising a glass substrate, wherein the marking is invisible to naked eye in transmission, the marking contains particles having a size of from 150 to 600nm, preferably from 150 to 350nm, more preferably from 200 to 300nm, and at least a portion of the marking is present below a surface of the glass substrate, and extends along the thickness direction of the glass substrate from the surface of the glass substrate to the interior.

2. The glass product with marking according to claim 1, wherein, the particles are crystals.

3. The glass product with marking according to claim 1 or 2, wherein, the marking is invisible to naked eye in daylight or natural light in reflection, and/or

   the marking is readable in the following light source: the spectrum peak of the light source locates in blue and/or UV light, and/or
   the marking is readable in Neon light, cold white LED light, blue light, UV light or collimated light in reflection.

4. The glass product with marking according to any one of claims 1 to 3, wherein,

   the depth of the marking extending along the thickness direction of the glass substrate from the surface of the glass substrate to the interior is from 5 nm to 100 $\mu m$, preferably from 10 nm to 50 $\mu m$, more preferably from 10 nm to 10 $\mu m$, and/or
   the marking is identification code, for example, Data matrix code, two-dimensional code, QR code or bar code.

5. The glass product with marking according to any one of claims 1 to 4, wherein, the glass product with marking is prepared according to the process of any one of claims 6 to 9.

6. A process for preparing a glass product with marking according to claims 1 to 4, comprising

    1) coating an ink composition onto a surface of a glass substrate,
    2) heating the glass substrate obtained in step 1);

    wherein, in the obtained glass product with marking, the marking contains particles having a size of from 150 to 600 nm, preferably from 150 to 350 nm, more preferably from 200 to 300 nm.

7. The process for preparing a glass product with marking according to claim 6, wherein, the particles are crystals.

8. The process for preparing a glass product with marking according claim 6 or 7, wherein, the ink composition comprises halogen-containing compound and/or phosphate based compound, and preferably, based on the total weight of the ink composition,

    content of halogen-containing compound is from 0.5 to 10 wt%, preferably from 1 to 5 wt%; and/or
    content of phosphorus element in the phosphate-based compound is from 0.05 to 4 wt%, preferably from 0.15 to 2.5 wt%.

9. The process for preparing a glass product with marking according to claim 6 or 7, wherein, the coating in step 1) is performed with inkjet printing, and/or

    thickness of the ink composition coated onto the surface of the glass substrate in step 1) is from 1 to 100 $\mu$m, preferably from 1 to 60 $\mu$m, more preferably from 1 to 35 $\mu$m, and/or
    the heating in step 2) is conducted at a temperature of from 550 to 750 °C.

10. Use of an ink composition in the process for preparing a glass product with marking according to any one of claims 6 to 9, or in the preparation of the glass product with marking according to any one of claims 1 to 5, wherein, the marking contains particles having a size of from 150 to 600nm, preferably from 150 to 350nm, more preferably from 200 to 300nm.

11. The use according to claim 10, wherein, the particles are crystals.

12. The use according to claim 10, wherein, the ink composition comprises halogen-containing compound and/or phosphate based compound, preferably, based on the total weight of the ink composition,

    the content of halogen-containing compound is from 0.5 to 10 wt%, preferably from 1 to 5 wt%; and/or
    the content of phosphorus element in the phosphate-based compound is from 0.05 to 4 wt%, preferably from 0.15 to 2.5 wt%.

**Patentansprüche**

1. Glasprodukt mit Markierung, umfassend ein Glassubstrat, wobei die Markierung bei Durchstrahlung mit dem bloßen Auge nicht sichtbar ist, die Markierung Partikel, die eine Größe von 150 bis 600 nm, vorzugsweise von 150 bis 350 nm, mehr bevorzugt von 200 bis 300 nm aufweisen, enthält und sich mindestens ein Abschnitt der Markierung unterhalb einer Oberfläche des Glassubstrats befindet und sich entlang der Dickenrichtung des Glassubstrats von der Oberfläche des Glassubstrats ins Innere erstreckt.

2. Glasprodukt mit Markierung nach Anspruch 1, wobei die Partikel Kristalle sind.

3. Glasprodukt mit Markierung nach Anspruch 1 oder 2, wobei die Markierung bei Tageslicht oder natürlichem Licht bei Reflexion für das bloße Auge nicht sichtbar ist, und/oder

    die Markierung in der folgenden Lichtquelle lesbar ist: die Spektralspitze der Lichtquelle liegt in einem blauen und/oder UV-Licht, und/oder

die Markierung ist in Neonlicht, kaltweißem LED-Licht, blauem Licht, UV-Licht oder kollimiertem Licht bei Reflexion lesbar.

4.  Glasprodukt mit Markierung nach einem der Ansprüche 1 bis 3, wobei

    die Tiefe der Markierung, die sich entlang der Dickenrichtung des Glassubstrats von der Oberfläche des Glassubstrats bis ins Innere erstreckt, von 5 nm bis 100 $\mu$m, vorzugsweise von 10 nm bis 50 $\mu$m, mehr bevorzugt von 10 nm bis 10 $\mu$m, beträgt, und/oder
    die Markierung ein Identifikationscode, beispielsweise einen Datenmatrixcode, ein zweidimensionaler Code, ein QR-Code oder ein Strichcode ist.

5.  Glasprodukt mit Markierung nach einem der Ansprüche 1 bis 4, wobei das Glasprodukt mit Markierung gemäß dem Verfahren nach einem der Ansprüche 6 bis 9 hergestellt ist.

6.  Verfahren zum Herstellen eines Glasprodukts mit Markierung nach den Ansprüchen 1 bis 4, umfassend

    1) Aufbringen einer Tintenzusammensetzung auf eine Oberfläche eines Glassubstrats,
    2) Erhitzen des Glassubstrats, das in Schritt 1) erhalten wird;

    wobei in dem erhaltenen Glasprodukt mit Markierung, die Markierung Partikel, die eine Größe von 150 bis 600 nm, bevorzugt von 150 bis 350 nm, mehr bevorzugt von 200 bis 300 nm aufweisen, enthält.

7.  Verfahren zum Herstellen eines Glasprodukts mit Markierung nach Anspruch 6, wobei die Partikel Kristalle sind.

8.  Verfahren zum Herstellen eines Glasprodukts mit Markierung nach Anspruch 6 oder 7, wobei die Tintenzusammensetzung eine halogenhaltige Verbindung und/oder eine phosphatbasierte Verbindung umfasst, und vorzugsweise, basierend auf dem Gesamtgewicht der Tintenzusammensetzung,

    ein Gehalt an halogenhaltiger Verbindung von 0,5 bis 10 Gew.-%, vorzugsweise von 1 bis 5 Gew.-%, beträgt; und/oder
    der Gehalt an Phosphorelementen in der phosphatbasierten Verbindung von 0,05 bis 4 Gew.-%, vorzugsweise von 0,15 bis 2,5 Gew.-%, beträgt.

9.  Verfahren zum Herstellen eines Glasprodukts mit Markierung nach Anspruch 6 oder 7, wobei das Aufbringen in Schritt 1) mit Tintenstrahldruck durchgeführt wird, und/oder

    die Dicke der Tintenzusammensetzung, die in Schritt 1) auf die Oberfläche des Glassubstrats aufgebracht wird, von 1 bis 100 $\mu$m, vorzugsweise von 1 bis 60 $\mu$m, mehr bevorzugt von 1 bis 35 $\mu$m, beträgt, und/oder
    das Erhitzen in Schritt 2) bei einer Temperatur von 550 bis 750 °C ausgeführt wird.

10. Verwendung einer Tintenzusammensetzung in dem Verfahren zum Herstellen eines Glasprodukts mit Markierung nach einem der Ansprüche 6 bis 9 oder bei der Herstellung des Glasprodukts mit Markierung nach einem der Ansprüche 1 bis 5, wobei die Markierung Partikel, die eine Größe von 150 bis 600 nm, vorzugsweise von 150 bis 350 nm, mehr bevorzugt von 200 bis 300 nm aufweisen, enthält.

11. Verwendung nach Anspruch 10, wobei die Partikel Kristalle sind.

12. Verwendung nach Anspruch 10, wobei die Tintenzusammensetzung eine halogenhaltige Verbindung und/oder eine phosphatbasierte Verbindung umfasst, vorzugsweise, basierend auf dem Gesamtgewicht der Tintenzusammensetzung,

    der Gehalt an halogenhaltiger Verbindung von 0,5 bis 10 Gew.-%, vorzugsweise von 1 bis 5 Gew.-%, beträgt; und/oder
    der Gehalt an Phosphorelement in der phosphatbasierten Verbindung von 0,05 bis 4 Gew.-%, vorzugsweise von 0,15 bis 2,5 Gew.-%, beträgt.

**Revendications**

1. Produit en verre avec marquage, comprenant un substrat en verre, dans lequel le marquage est invisible à l'oeil nu en transmission, le marquage contient des particules ayant une taille de 150 à 600 nm, de préférence de 150 à 350 nm, plus préférablement de 200 à 300 nm, et au moins une partie du marquage est présente sous une surface du substrat en verre, et s'étend le long de la direction de l'épaisseur du substrat en verre depuis la surface du substrat en verre jusqu'à l'intérieur.

2. Produit en verre avec marquage selon la revendication 1, dans lequel les particules sont des cristaux.

3. Produit verrier avec marquage selon la revendication 1 ou 2, dans lequel le marquage est invisible à l'oeil nu à la lumière du jour ou à la lumière naturelle en réflexion, et/ou

    le marquage est lisible dans la source lumineuse suivante : le pic de spectre de la source lumineuse se situe dans la lumière bleue et/ou UV, et/ou
    le marquage est lisible en lumière néon, en lumière LED blanche froide, en lumière bleue, en lumière UV ou en lumière collimatée en réflexion.

4. Produit en verre avec marquage selon l'une quelconque des revendications 1 à 3, dans lequel,

    la profondeur du marquage s'étendant le long de la direction de l'épaisseur du substrat de verre depuis la surface du substrat de verre jusqu'à l'intérieur est comprise entre 5 nm et 100 $\mu$m, de préférence entre 10 nm et 50 $\mu$m, plus préférablement entre 10 nm et 10 $\mu$m, et/ou
    le marquage est un code d'identification, par exemple un code Data matrix, un code bidimensionnel, un code QR ou un code à barres.

5. Produit verrier avec marquage selon l'une quelconque des revendications 1 à 4, dans lequel le produit verrier avec marquage est préparé selon le procédé de l'une quelconque des revendications 6 à 9.

6. Procédé de préparation d'un produit en verre avec marquage selon les revendications 1 à 4, comprenant

    1) l'application d'une composition d'encre sur la surface d'un substrat en verre,
    2) le chauffage du substrat de verre obtenu à l'étape 1) ;

    dans lequel, dans le produit en verre obtenu avec marquage, le marquage contient des particules d'une taille de 150 à 600 nm, de préférence de 150 à 350 nm, plus préférablement de 200 à 300 nm.

7. Procédé de préparation d'un produit en verre avec marquage selon la revendication 6, dans lequel les particules sont des cristaux.

8. Procédé de préparation d'un produit en verre avec marquage selon la revendication 6 ou 7, dans lequel la composition d'encre comprend un composé contenant des halogènes et/ou un composé à base de phosphate, et de préférence, sur la base du poids total de la composition d'encre,

    la teneur en composés halogénés est de 0,5 à 10 % en poids, de préférence de 1 à 5 % en poids ; et/ou
    la teneur en élément phosphore dans le composé à base de phosphate est comprise entre 0,05 et 4 % en poids, de préférence entre 0,15 et 2,5 % en poids.

9. Procédé de préparation d'un produit en verre avec marquage selon la revendication 6 ou 7, dans lequel le revêtement à l'étape 1) est effectué par impression à jet d'encre, et/ou

    l'épaisseur de la composition d'encre appliquée sur la surface du substrat en verre à l'étape 1) est de 1 à 100 $\mu$m, de préférence de 1 à 60 $\mu$m, plus préférablement de 1 à 35 $\mu$m, et/ou
    le chauffage à l'étape 2) est conduit à une température comprise entre 550 et 750 °C.

10. Utilisation d'une composition d'encre dans le procédé de préparation d'un produit verrier avec marquage selon l'une quelconque des revendications 6 à 9, ou dans la préparation du produit verrier avec marquage selon l'une quelconque des revendications 1 à 5, dans laquelle, le marquage contient des particules ayant une taille de 150 à 600 nm, de préférence de 150 à 350 nm, plus préférablement de 200 à 300 nm.

11. Utilisation selon la revendication 10, dans laquelle les particules sont des cristaux.

12. Utilisation selon la revendication 10, dans laquelle la composition de l'encre comprend un composé contenant de l'halogène et/ou un composé à base de phosphate, de préférence par rapport au poids total de la composition de l'encre,

> la teneur en composés halogénés est comprise entre 0,5 et 10 % en poids, de préférence entre 1 et 5 % en poids ; et/ou
> la teneur en élément phosphore dans le composé à base de phosphate est comprise entre 0,05 et 4 % en poids, de préférence entre 0,15 et 2,5 % en poids.

(a) D65 light source

(b) cold white LED light

**Figure 1**

Coating an ink composition onto a surface of a glass substrate

Heating

Removing residues on the surface of the glass substrate

**Figure 2**

18

(a)

(b)

**Figure 3**

Figure 4

Figure 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3365398 A1
- CN 103666057 A
- US 2008210122 A1
- US 8575768 B2
- JP H09143448 A
- CN 106061746 A

**Non-patent literature cited in the description**

- *CHEMICAL ABSTRACTS,* 25068-38-6
- *CHEMICAL ABSTRACTS,* 1187441-10-6
- *CHEMICAL ABSTRACTS,* 86273-46-3
- *CHEMICAL ABSTRACTS,* 63225-53-6
- *CHEMICAL ABSTRACTS,* 13048-33-4
- *CHEMICAL ABSTRACTS,* 66492-51-1
- *CHEMICAL ABSTRACTS,* 111497-86-0
- *CHEMICAL ABSTRACTS,* 94624-09-6
- *CHEMICAL ABSTRACTS,* 84170-74-1
- *CHEMICAL ABSTRACTS,* 28961-43-5